# DEMANDE DE BREVET EUROPEEN

(11) **EP 0 869 339 A1**
(43) Date de publication de la demande: **07.10.1998**
(21) Numéro de dépôt: 98400698.1
(22) Date de dépôt: 25.03.1998
(51) Int. Cl.: G01F 23/00

(54) **Dispositif formant jauge de carburant de réservoir d'un véhicule automobile**

(30) Priorité: 01.04.1997 FR 9703956
(71) Demandeur: AUTOMOBILES PEUGEOT, 75116 Paris (FR); AUTOMOBILES CITROEN, 92200 Neuilly-sur-Seine (FR)
(72) Inventeur: Brame, Jean-Luc, 94200 Ivry (FR)
(74) Mandataire: Thinat, Michel

(57) **Abrégé**

La présente invention concerne un dispositif formant jauge de carburant de réservoir de véhicule automobile.

Le dispositif est caractérisé en ce qu'il comprend un calculateur (CA) embarqué sur le véhicule programmé pour traiter le signal de sortie du capteur (C) représentatif du niveau de carburant dans le réservoir (R) suivant une loi de jaugeage de ce réservoir mémorisée dans le calculateur (CA) pour qu'un moyen indicateur (IND) donne une indication correcte du niveau de carburant dans le réservoir (R).

L'invention trouve application dans le domaine de l'automobile.

## Description

La présente invention concerne un dispositif formant jauge de carburant de réservoir d'un véhicule automobile.

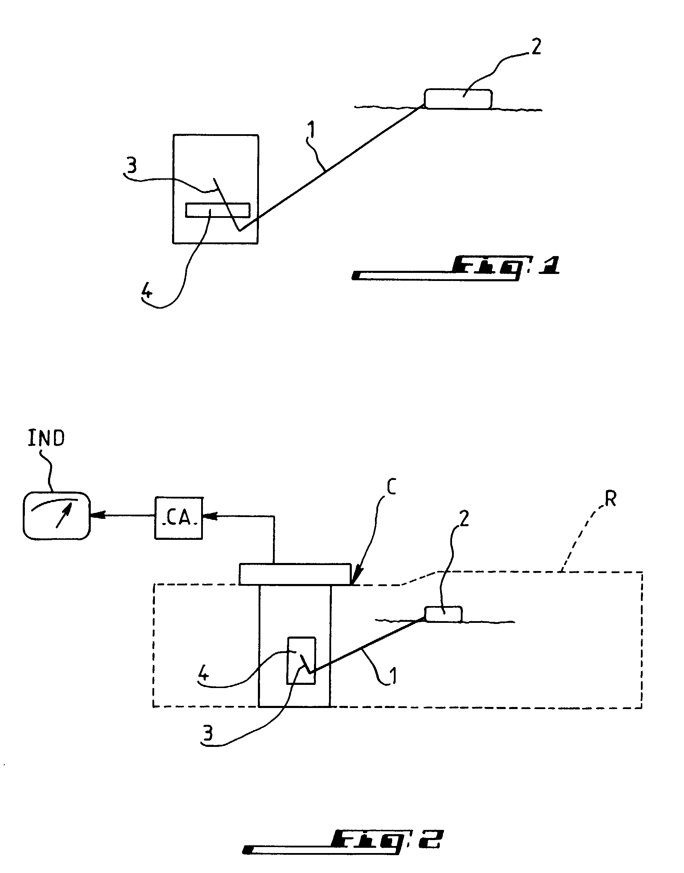

La figure 1 représente une jauge connue de carburant comprenant un bras 1 dont une extrémité est solidaire d'un flotteur 2 et monté pivotant relativement au réservoir du véhicule de manière à déplacer angulairement un curseur 3, solidaire de l'autre extrémité du bras pivotant 1, sur une piste résistive 4. Le flotteur 2 détermine la hauteur de flottaison et donc le niveau de carburant dans le réservoir et qui est transformée en une valeur de position angulaire du bras pivotant 1 correspondant à une valeur de résistance ohmique de sortie de la jauge. Le signal électrique correspondant à une telle valeur de résistance est transmis à un moyen indicateur généralement situé dans le combiné du véhicule de manière à indiquer visuellement au conducteur le niveau de carburant dans le réservoir du véhicule.

Habituellement, et à cause de la technologie des moyens indicateurs utilisés jusqu'à maintenant, la loi de jaugeage permettant de faire le lien entre le réservoir de carburant et le moyen indicateur de niveau de carburant est comme suit : lorsque le réservoir est totalement rempli de carburant, la valeur de résistance de sortie est de 3 ohms ; lorsque le réservoir de carburant est à moitié plein, la résistance de sortie est de 98 ohms ; et lorsque le réservoir de carburant est vide, la valeur de résistance de sortie est de 280 ohms.

Il existe également une autre loi de jaugeage telle qu'à un litre de carburant consommé corresponde une variation de résistance de sortie de la jauge de 5 ohms.

Cependant, si ces types de jauge donnent satisfaction sur la mesure de niveau de carburant, ils posent un problème de mise au point lié essentiellement à la technologie utilisée de fabrication du réservoir. En effet, pour des raisons de coût, les réservoirs de véhicules automobiles sont le plus souvent obtenus par soufflage et de tels réservoirs ont ainsi une géométrie qui dépend beaucoup de la mise au point du procédé de soufflage et demandent en plus une stabilisation du procédé pour obtenir des résultats fiables. La mise au point du jaugeage conduit alors dans la plupart des cas à la réalisation de prototypes de jauges pour effectuer des mesures et un ajustement plus ou moins long qui va générer autant de réalisations de pièces différentes que d'essais. Si la loi de jaugeage n'est pas en parfaite adéquation avec le réservoir, celle-ci sera modifiée jusqu'à obtenir une mise au point appropriée. De plus, dans la mesure où la mise au point du jaugeage est liée à la technologie de fabrication du réservoir, une telle mise au point s'effectuera très tardivement, ce qui induira, compte tenu des contraintes des délais industriels de réalisation de la jauge, des démarrages en série souvent imparfaits. Enfin, on impose que la jauge connue ait une résistance de sortie donnée pour un niveau de remplissage donné du réservoir.

La présente invention a pour but d'éliminer les inconvénients ci-dessus en proposant un dispositif formant jauge de carburant de réservoir de véhicule automobile, comprenant un capteur fournissant un signal électrique représentatif du niveau de carburant dans le réservoir et un moyen indicateur visuel de ce niveau de carburant et qui est caractérisé en ce qu'il comprend un calculateur embarqué sur le véhicule et programmé pour traiter le signal de sortie du capteur suivant une loi de jaugeage du réservoir mémorisée dans le calculateur pour que le moyen indicateur donne une indication correcte du niveau de carburant dans le réservoir.

La mémoire du calculateur contient un certain nombre de points de la loi de jaugeage qui correspondent respectivement à des valeurs caractéristiques du niveau de carburant à indiquer par le moyen indicateur et le calculateur est apte à effectuer une fonction d'interpolation entre deux points consécutifs mémorisés pour fournir au moyen indicateur les valeurs correctes du niveau de carburant entre deux valeurs de niveau caractéristiques consécutives.

La fonction d'interpolation est une fonction linéaire, une fonction parabolique ou une fonction d'ordre n.

De préférence, le calculateur est celui du combiné ou de l'ordinateur central du véhicule.

La loi de jaugeage est mémorisée dans une mémoire non volatile reprogrammable.

Le capteur comprend un bras relié à un flotteur de façon à se déplacer sur une piste résistive, en contactant celle-ci, suivant le niveau de carburant dans le réservoir pour que le capteur fournisse en sortie une variation de résistance, par exemple de 5 ohms, à chaque déplacement discret du bras.

Ce bras est monté pivotant pour se déplacer angulairement relativement à la piste résistive de façon qu'à un déplacement angulaire du bras, par exemple de 1° d'angle, corresponde la variation précitée de résistance.

Bien entendu, on peut aussi utiliser un capteur continu.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 représente une jauge de carburant connue.

La figure 2 représente un dispositif formant jauge de carburant conforme à l'invention.

Le dispositif formant jauge de carburant de l'invention tel que représenté en figure 2 comprend un capteur C de niveau du carburant dans le réservoir R d'un véhicule automobile, un calculateur CA embarqué sur le véhicule et recevant le signal électrique de sortie du capteur C. Le calculateur CA, de préférence celui du combiné ou de l'ordinateur central du véhicule, commande un moyen indicateur visuel IND pour qu'il indique le niveau de carburant dans le réservoir R comme on le verra ultérieurement.

Le capteur C peut être n'importe quel type de capteur de niveau de carburant. Le capteur C représenté en figure 2 est du type semblable à celui de la figure 1, c'est-à-dire comprenant le bras pivotant 1 relié au flotteur 2 et au curseur 3 contactant la piste résistive 4. Le capteur fournit ainsi une valeur de résistance de sortie fonction de l'angle que fait le bras 1 avec la verticale ou une horizontale. A titre d'exemple, le capteur peut être défini pour fournir une variation de résistance de sortie de 5 ohms par degré d'angle de déplacement du bras 1. Il est avantageux dans le cadre de la présente invention d'utiliser un capteur le plus précis possible. Pour cela, on cherchera à utiliser un capteur ayant une course angulaire la plus grande possible pour avoir la précision maximale. Par ailleurs, les technologies utilisées actuellement dans l'automobile permettent d'utiliser un capteur ayant une précision d'un degré d'angle de déplacement du bras du capteur. Bien entendu, tout autre type de capteur, tel que par exemple un capteur continu linéaire, peut être utilisé sans sortir du cadre de la présente invention.

Le calculateur CA est programmé pour traiter le signal de sortie du capteur C, pouvant être par exemple un courant électrique traversant la résistance ohmique du capteur C et d'une valeur correspondant à la position angulaire du bras 1 de ce capteur, suivant une loi de jaugeage mémorisée dans le calculateur CA pour que le moyen indicateur IND fournisse une indication correcte du niveau de carburant dans ce réservoir. A un volume de carburant en litres correspond une hauteur ou niveau de carburant dans le réservoir qui correspond elle-même à une valeur de résistance ohmique en sortie du capteur C. Cette valeur de résistance ohmique correspond à un signal transmis au calculateur CA et, selon l'invention, le calculateur CA traite ce signal et transmet un signal de sortie au moyen indicateur IND pour que ce dernier donne une indication correspondant bien à la quantité réelle de carburant dans le réservoir R. Le traitement par le calculateur CA du signal qu'il reçoit s'effectue à partir d'une loi de jaugeage déterminée par des essais préalables. Bien entendu, une telle loi est valable pour un ensemble constitué par un réservoir d'un type donné, un capteur d'un type donné et un moyen indicateur d'un type donné et, si l'on change un ou plusieurs de ces éléments, il faut une autre loi qui sera déterminée par d'autres essais. Au cours de ces essais préalables, on introduit des quantités connues de carburant et on ne prend en considération que le signal de sortie du capteur pour le transformer afin que le moyen indicateur donne une indication correcte. Si l'on connaît déjà la loi de jaugeage correspondant au réservoir, au capteur et au moyen indicateur qui vont équiper un certain type de véhicule, il suffit de programmer en conséquence le calculateur qui équipera ce type de véhicule, ce qui diminue le coût de fabrication. La loi de jaugeage détermine donc en quelque sorte la fonction de transfert de l'ensemble constitué par le réservoir et la jauge et elle établit une relation entre le volume réel de carburant et la valeur de résistance ohmique en sortie du capteur. Par exemple, la mémoire du calculateur peut contenir un certain nombre de points de la loi de jaugeage correspondant respectivement à des valeurs caractéristiques du niveau du carburant devant être affichées par le moyen indicateur IND et le calculateur CA est apte à effectuer une fonction d'interpolation entre deux points consécutifs mémorisés pour fournir au moyen indicateur IND les valeurs du niveau de carburant entre deux valeurs caractéristiques consécutives. Ainsi, la mémoire peut stocker des valeurs ohmiques correspondant aux points caractéristiques de l'indicateur IND et on peut considérer comme linéaire la fonction d'interpolation intermédiaire pour calculer les valeurs de niveau devant être indiquées par le moyen indicateur IND comme montré dans l'exemple ci-dessous.
- 4/4: x1
- 3/4: x2
- 1/2: x3
- 1/4: x4
- Alerte: x5
- Zéro: x6
où les indications à la colonne de gauche ci-dessus correspondent aux valeurs données par le moyen indicateur IND du niveau de carbuant dans le réservoir et x1 à x6 à la colonne de droite sont des valeurs de résistance ohmique correspondant respectivement aux valeurs du niveau de carburant dans le réservoir.

Bien entendu, la précision du jaugeage peut être améliorée en considérant un nombre plus important de points caractéristiques qui ne sont pas forcément des points caractéristiques usuels.

De plus, au lieu d'utiliser une fonction d'interpolation linéaire entre deux points, il est possible d'utiliser des fonctions d'ordre supérieur, par exemple une fonction parabolique, une fonction d'ordre 3, une fonction d'ordre n... ou toute autre fonction pouvant être utilisée par le calculateur embarqué.

De préférence, la loi de jaugeage est mémorisée dans une mémoire non volatile reprogrammable.

L'invention permet donc d'utiliser le calculateur disponible dans le combiné ou l'ordinateur de bord du véhicule et le réglage du capteur du niveau de carburant dans le réservoir peut se faire sans qu'il soit besoin de connaître la géométrie précise du réservoir. Par ailleurs, outre la parfaite adéquation entre l'indication au tableau de bord et la quantité réelle de carburant dans le réservoir, il n'est plus nécessaire d'adapter les différents éléments les uns aux autres (par exemple le capteur au réservoir pour avoir une relation linéaire entre le signal de sortie du capteur et le niveau de carburant).

## Revendications

1. Dispositif formant jauge de carburant de réservoir de véhicule automobile, comprenant un capteur (C) fournissant un signal électrique représentatif du niveau de carburant dans le réservoir (R) et un moyen indicateur visuel (IND) de ce niveau de carburant, caractérisé en ce qu'il comprend un calculateur (CA) embarqué sur le véhicule et programmé pour traiter le signal de sortie du capteur (C) suivant une loi de jaugeage du réservoir (R) mémorisée dans le calculateur (CA) pour que le moyen indicateur (IND) donne une indication correcte du niveau de carburant dans le réservoir (R).

2. Dispositif selon la revendication 1, caractérisé en ce que la mémoire du calculateur contient un certain nombre de points de la loi de jaugeage correspondant respectivement à des valeurs caractéristiques du niveau du carburant à indiquer par le moyen indicateur (IND) et le calculateur (CA) est apte à effectuer une fonction d'interpolation entre deux points consécutifs mémorisés pour fournir au moyen indicateur les valeurs correctes du niveau de carburant entre deux valeurs caractéristiques consécutives.

3. Dispositif selon la revendication 2, caractérisé en ce que la fonction d'interpolation est une fonction linéaire, une fonction parabolique, ou une fonction d'ordre n.

4. Dispositif selon l'une des revendications précédentes, caractérisé en ce que le calculateur (CA) est celui du combiné ou de l'ordinateur central du véhicule.

5. Dispositif selon l'une des revendications précédentes, caractérisé en ce que la loi de jaugeage est mémorisée dans une mémoire non volatile reprogrammable.

6. Dispositif selon l'une des revendications précédentes, caractérisé en ce que le capteur (C) comprend un bras (1) relié à un flotteur (2) de façon à se déplacer sur une piste résistive (4), en contactant celle-ci, suivant le niveau de carburant dans le réservoir (R) pour que le capteur (C) fournisse en sortie une variation de résistance, par exemple de 5 ohms, à chaque déplacement discret du bras (1).

7. Dispositif selon la revendication 6, caractérisé en ce que le bras (1) est monté pivotant pour se déplacer angulairement relativement à la piste résistive (4) de façon qu'à un déplacement angulaire du bras (1), par exemple de un degré d'angle, corresponde la variation précitée de résistance.

8. Dispositif selon l'une quelconque des revendications 1 à 5, caractérisé en ce que le capteur (C) est un capteur continu.
